# EUROPEAN PATENT APPLICATION

(11) **EP 4 697 652 A1**
(43) Date of publication of application: **18.02.2026**
(21) Application number: 25195622.3
(22) Date of filing: 13.08.2025
(51) Int. Cl.: H04L 9/40, G06F 21/32

(54) **TRUSTED IDENTIFICATION VERIFICATION SYSTEM**

(30) Priority: 16.08.2024 US 202418807624
(71) Applicant: CrowdStrike Inc., Sunnyvale, CA 94086 (US)
(72) Inventor: Hunter-Gonzalez, Trevor, Sunnyvale, 94086 (US)
(74) Representative: Murgitroyd & Company

(57) **Abstract**

The present disclosure provides techniques for biometric and trusted ID verification. A method includes transmitting, by a first device during a communication session between the first device and a second device, a challenge to an identity of a user of the second device to at least one of a server or the second device. The method includes receiving, at the first device and based on the challenge during the communication session, a response from the server indicating a verification status of the identity of the user, where the response is based on associations of trusted IDs and biometric IDs maintained by the server, and where the response is further based on biometric data of the user. The method includes presenting, at the first device during the communication session, an indication of the response.

## Description

### TECHNICAL FIELD

Aspects of the present disclosure relate to cybersecurity, and more particularly, to a trusted identification (ID) verification system.

### BACKGROUND

Cybersecurity refers to the practice of protecting computer systems, networks, and digital assets from theft, damage, unauthorized access, and various forms of cyber threats. Cybersecurity threats encompass a wide range of activities and actions that pose risks to the confidentiality, integrity, and availability of computer systems and data. These threats can include malicious activities such as viruses, ransomware, and hacking attempts aimed at exploiting vulnerabilities in software or hardware. The threats may also include deepfake attacks.

### SUMMARY

According to the invention there is provided a method, a system and a non-transitory computer readable medium as defined in the claims that follow.

### BRIEF DESCRIPTION OF THE DRAWINGS

The described embodiments and the advantages thereof may best be understood by reference to the following description taken in conjunction with the accompanying drawings. These drawings in no way limit any changes in form and detail that may be made to the described embodiments by one skilled in the art without departing from the spirit and scope of the described embodiments.
FIG. 1 is a block diagram that illustrates an example of a system for trusted ID verification in accordance with some aspects of the present disclosure.
FIG. 2A is a communication flow diagram that illustrates example communications for biometric and trusted ID verification in accordance with some aspects of the present disclosure.
FIG. 2B is a diagram illustrating an example user interface (UI) for trusted ID verification in accordance with some aspects of the present disclosure.
FIG. 3 is a diagram that illustrates an example of a system for trusted ID verification in accordance with some aspects of the present disclosure.
FIG. 4 is a flow diagram of a method for trusted ID verification in accordance with some aspects of the present disclosure.
FIG. 5 is a flow diagram of a method for trusted ID verification in accordance with some aspects of the present disclosure.
FIG. 6 illustrates a diagrammatic representation of a machine in an example form of a computer system that may perform one or more of the operations described herein in accordance with some aspects of the present disclosure.

### DETAILED DESCRIPTION

A deepfake may refer to media that is manipulated to replace a likeness of one person convincingly with that of another person. A deepfake may include video, pictures, and/or audio made with an artificial intelligence (AI) model to appear real. Certain AI models and algorithms, such as facial recognition algorithms and artificial neural networks including variational autoencoders (VAEs) and generative adversarial networks (GANs) may create content that is difficult for an observer to determine as nonauthentic.

Deepfakes may present a security risk. For example, an attacker may use deepfake technology (e.g., a VAE, a GAN, etc.) during a phone call with a victim in order to impersonate a voice of a person trusted by the victim. With more particularity, a first device (e.g., a first phone) of the attacker may initiate a phone call with a second device (e.g., a second phone) of the victim. As the first device receives audio input with first characteristics (e.g., a first pitch, a first tone, a first resonance, a first power, etc.) from the attacker, the deepfake technology may alter the audio input such that the altered audio input has second characteristics (e.g., a second pitch, a second tone, a second resonance, a second power, etc.) associated with the trusted person. The first device may transmit the altered audio input to the second device, whereupon the second device may play the altered audio input over a speaker on the second device. When played over the speaker, the altered audio input may be perceived as being from the trusted person and not the attacker. As the victim may believe that the attacker is the trusted person, the victim may divulge confidential and/or sensitive information to the attacker during the phone call or video call.

Some approaches to preventing deepfake attacks may include spam call filters and a non-contact call blocking system. A spam call filter may identify a call as likely being spam based on a list of numbers associated with spam calls. In some aspects, the spam call filter may terminate the call prior to a recipient of the call accepting the call. A non-contact call blocking system may block calls originating from numbers on a non-contact list maintained by a device. However, spam call filters may not be able to block an attack with a normally registered cell number with a fake ID. For non-contact call blocking technology, a scammer may be able to spoof phone numbers and present a caller ID separate from an originating number, thus bypassing the non-contact call blocking technology. If a user is suspicious of the caller, the user may ask questions to the caller in order to ascertain an identity of the caller. However, some deepfakes may appear to be authentic from the perspective of the user and as such the caller may not appear to be suspicious to the user. Furthermore, even if the user is suspicious, the caller may have correct answers to the questions. Additionally, asking the questions during the call may utilize network resources.

The present disclosure addresses the above-noted and other deficiencies via a trusted ID verification system. With more particularity, during a communication session (e.g., a phone call, a video call, etc.) between a first device of a first user and a second device of a second user, the first device may receive input from the first user (e.g., on a call screen UI) that causes the first device to transmit a challenge that requests the second device to transmit biometric data (e.g., a facial scan, an iris scan, etc.) of the second user to a server. In an example, the first device may receive the input after the second user asks the first user for sensitive information during the communication session. The challenge may include an identifier for the second user obtained by the first device during the communication session. The second device may receive the challenge. Based on the challenge, the second device may transmit biometric data of the second user to the server. The server may maintain associations of biometric IDs of users with trusted ID data (e.g., government issued ID data) of the users. The server may determine whether the biometric IDs include a biometric ID corresponding to the biometric data. In one example, the biometric IDs include a biometric ID corresponding to the biometric data. The server may identify trusted ID data (e.g., government issued ID data) based on an association between the biometric ID and the trusted ID data. The server may transmit an indication to the first device indicating that an identity of the second user has been verified. The indication may be based on a comparison between the identifier for the second user obtained during the communication session and information from the trusted issued ID data. In another example, the biometric IDs do not include a biometric ID corresponding to the biometric data. The server may transmit an indication to the first device indicating that an identity of the second user cannot be verified. In yet another example, the second user is utilizing deepfake technology to impersonate a trusted person of the first person. The server may determine that the biometric IDs include a biometric ID corresponding to the second user and the server may identify trusted ID data based on an association between the biometric ID and the trusted ID data; however, the server may compare the identifier for the second user obtained during the communication session with information from the trusted ID data. The comparison may indicate that the identifier for the second user and the information from the trusted ID data are not equivalent (i.e., the second user is not who they are asserting themselves to be). The server may transmit an indication to the first device indicating that the identity of the second user is not verified. The first device may present an indication on a display of the first device as to whether the identity of the second user is verified, cannot be verified, or is not verified.

In an example, a processing device transmits, by a first device during a communication session between the first device and a second device, a challenge to an identity of a user of the second device to at least one of a server or the second device. The processing device receives, at the first device and based on the challenge during the communication session, a response from the server indicating a verification status of the identity of the user of the second device, where the response is based on associations of trusted IDs and biometric IDs maintained by the server, and where the response is further based on biometric data of the user. The processing device presents, at the first device during the communication session, an indication of the response.

As discussed herein, the present disclosure provides an approach that improves the operation of a computer system by reducing an amount of computing resources used to verify an identity of a caller. For example, a processing device of a first device, transmits, during a communication session between the first device and a second device, a challenge to an identity of a user of the second device to at least one of a server or the second device. The processing device receives, based on the challenge during the communication session, a response from the server indicating a verification status of the identity of the user of the second device, where the response is based on associations of trusted IDs and biometric IDs maintained by the server, and where the response is further based on biometric data of the user. Via the transmitting of the challenge and the receiving of the response, the present disclosure may reduce an amount of input processed by the first device used to verify an identity of the second user. Additionally, via transmitting the challenge and the receiving the response, the present disclosure may reduce usage of resources used for spam call filtering and/or non-contact ball blocking technology. Moreover, via the transmitting the challenge and the receiving the response, the present disclosure may conserve network resources. For instance, users may not have to ask additional questions to a caller in order to verify an identity of the caller, and hence a network does not have to convey such additional questions between devices. In addition, via the transmitting the challenge and the receiving the response, the present disclosure provides an improvement to the technological field of cybersecurity. For instance, the present disclosure may mitigate or prevent deepfake attacks in a rapid manner during a communication session (e.g., a phone call), that is, the present disclosure enables an identity of a caller to be verified rapidly during the communication session.

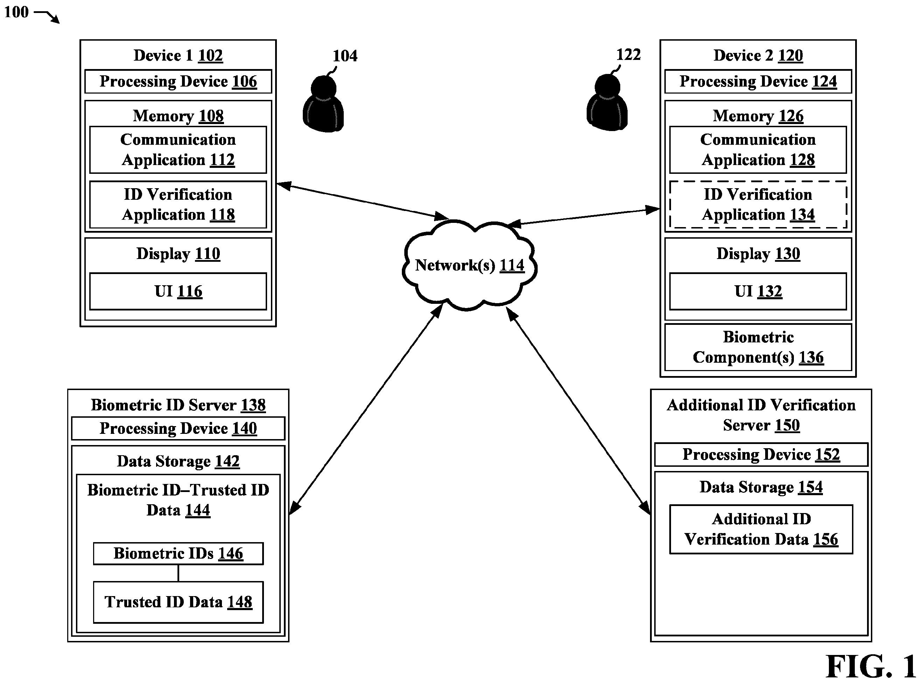

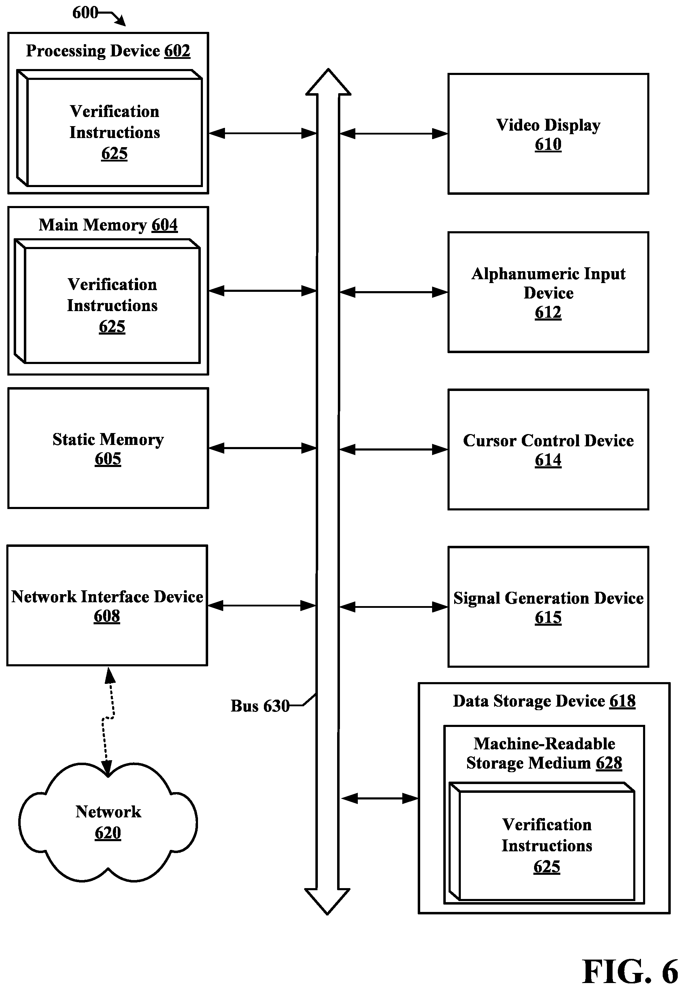

FIG. 1 is a block diagram 100 that illustrates an example of a system for trusted ID verification in accordance with some aspects of the present disclosure. The system may include a first device 102 of a first user 104. In an example, the first device 102 may be or include a computing device such as a phone (e.g., a smartphone), a tablet, a desktop computing device, a laptop computing device, a gaming console, an extended reality (XR) device, or a wearable display device (e.g., a smartwatch). The first device 102 may include a processing device 106, a memory 108, and a display 110. Although not depicted in FIG. 1, the first device 102 may also include additional components (e.g., a microphone, a speaker, a video camera, a network interface device, an alphanumeric input device, a biometric component, etc.), such as those described below in the description of FIG. 6. Although the description below describes the first user 104 as a human user, in some aspects, the first user 104 may be a non-human user, such as an automated customer service system.

The memory 108 may store a communication application 112. In general, the communication application 112, when executed by the processing device 106, facilitates a communication session with one or more devices. In one example, the communication application 112 is a phone call application that enables the first device 102 to transmit/receive audio to/from device(s), where the communication application 112 causes the audio to be played on the first device 102 via a speaker. In another example, the communication application 112 is a video call application that enables the first device 102 to transmit/receive video and audio to/from device(s), where the communication application 112 causes video and audio to be played on the first device 102 via the display 110 and a speaker. The communication application 112 may transmit and receive data (e.g., audio data, video data, etc.) with other device(s) via network(s) 114. In an example, the network(s) 114 may be or include a cellular network, a local area network (LAN), a wireless local area network (WLAN), or the Internet.

The communication application 112 may present a UI 116 on the display 110 in order to facilitate the communication session with the one or more devices. In an example, the UI 116 may include a keypad that enables the first device 102 to receive a phone number as input, and the communication application 112 may cause the first device 102 to call the phone number based on the input. In another example, the UI 116 may include a contacts list that displays contacts of the first user 104. When a contact is selected in the UI 116, the communication application 112 may cause the first device 102 to call a phone number associated with the contact. In yet another example, the UI 116 may include identifiers for users. When an identifier of a user is selected, the communication application 112 may cause the first device 102 to establish a video call with the user. Although the communication application 112 is depicted in FIG. 1 as being stored in the memory 108, in some aspects, some or all of the communication application 112 may be implemented in firmware and/or hardware.

The memory 108 further includes an ID verification application 118. In general, the ID verification application 118 facilitates trusted ID verification (e.g., biometric and government issued ID verification) (described in greater detail below). In some aspects, the ID verification application 118 may be included in the communication application 112. In some aspects, the ID verification application 118 may be a plug-in to the communication application 112. In some aspects, the ID verification application 118 may communicate with the communication application 112 via an application programming interface (API) of the communication application 112.

The system may include a second device 120 operated by a second user 122. In an example, the second device 120 may be or include a computing device such as a phone (e.g., a smartphone), a tablet, a desktop computing device, a laptop computing device, a gaming console, or a wearable display device (e.g., a smartwatch). The second device 120 may include a processing device 124, a memory 126, and a display 110. Although not depicted in FIG. 1, the second device 120 may also include additional components (e.g., a microphone, a speaker, a video camera, a network interface device, an alphanumeric input device, etc.), such as those described below in the description of FIG. 6. Although the description below describes the second user 122 as a human user, in some aspects, the second user 122 may be a non-human user, such as an automated customer service system.

The memory 126 may store a communication application 128. The communication application 128 may be similar or identical to the communication application 112. For instance, in general, the communication application 128, when executed by the processing device 124, facilitates a communication session with one or more other devices. In one example, the communication application 128 is a phone call application that enables the second device 120 to transmit/receive audio to/from device(s), where the communication application 128 causes the audio to be played on the second device 120 via a speaker. In another example, the communication application 128 is a video call application that enables the second device 120 to transmit/receive video and audio to/from device(s), where the communication application 128 causes video and audio to be played on the second device 120 via a display 130 and a speaker. The communication application 128 may transmit and receive data (e.g., audio data, video data, etc.) with other device(s) via the network(s) 114.

The communication application 128 may present a UI 132 on the display 130 in order to facilitate the communication session with the one or more devices. The UI 132 may be similar to or identical to the UI 116. In an example, the UI 132 may include a keypad that enables the second device 120 to receive a phone number as input, and the communication application 128 may cause the second device 120 to call the phone number based on the input. In another example, the UI 132 may include a contacts list that display contacts of the second user 122. When a contact is selected in the UI 132, the communication application 128 may cause the second device 120 to call a phone number associated with the contact. In yet another example, the UI 132 may include identifiers for users. When an identifier of a user is selected, the communication application 128 may cause the second device 120 to establish a video call with the user. Although the communication application 128 is depicted in FIG. 1 as being stored in the memory 126, in some aspects, some or all of the communication application 128 may be implemented in firmware and/or hardware.

In some aspects, the memory 126 may further include an ID verification application 134. The ID verification application 134 may be similar to or identical to the ID verification application 118. For instance, in general, the ID verification application 134 facilitates trusted ID verification (e.g., biometric and government issued ID verification) (described in greater detail below). In some aspects, the ID verification application 134 may be included in the communication application 128. In some aspects, the ID verification application 134 may be a plug-in to the communication application 128. In some aspects, the ID verification application 134 may communicate with the communication application 128 via an API of the communication application 128. In some aspects, the second device 120 may not include the ID verification application 134.

The second device 120 may include biometric component(s) 136. In general, the biometric component(s) 136 may be configured to capture biometric data of the second user 122. In an example, the biometric data may be or include facial data of the second user 122, iris data of the second user 122, fingerprint data of the second user 122, and/or voice data of the second user 122. The biometric component(s) 136 may be or include camera(s), microphone(s), fingerprint scanner(s), etc. In some aspects, the biometric component(s) 136 are controlled by/integrated with an operating system (OS) of the second device 120, such as a mobile OS. In some aspects, the ID verification application 134 and/or the communication application 128 may communicate with the biometric component(s) 136 by way of an API.

The system may further include a biometric ID server 138. In some aspects, the biometric ID server 138 may be a cloud server. The biometric ID server 138 may include a processing device 140 and data storage 142. In an example, the data storage 142 may be or include hard disk drives (HDDs) and/or solid-state drives (SSDs). Although not depicted in FIG. 1, the biometric ID server 138 may also include additional components (e.g., a network interface device, memory, etc.), such as those described below in the description of FIG. 6.

In general, the biometric ID server 138 is configured to maintain, in the data storage 142, biometric ID-trusted ID data 144 (e.g., biometric ID-government issued ID data). The biometric ID-trusted ID data 144 may include associations (e.g., links) between biometric IDs 146 of (human) users and trusted ID data 148 (e.g., government issued ID data) of the (human) users. In an example, the biometric IDs 146 may include facial data, iris data, fingerprint data, and/or voice data. The trusted ID data 148 may include information associated with IDs issued by a government or another entity. A trusted ID may refer to an ID granted based on a one or more proof of identity documents to an organization. In an example, in order to obtain a trusted ID (e.g., a government issued ID), users provide one or more proof of identity documents to an organization (e.g., an organization of a government). In an example, the one or more proof of identity documents may include a valid passport or passport card, an original copy of a birth certificate or a certified copy of a birth certificate, a valid permanent resident card, a certificate of naturalization, a certificate of citizenship, an employment authorization document, a social security card, tax information, or a pay stub. In an example, the trusted ID data 148 may include data associated with REAL IDs. A REAL ID may refer to an ID that is issued based on the REAL ID Act of 2005 in the United States.

In an example a user (e.g., the second user 122) obtains a trusted ID (e.g., a government issued ID). In an example, the user may visit a location (e.g., a government building) that issues IDs. The user may provide the one or more proof of identity documents (described above) to a representative of an organization in order to obtain the trusted ID. In an example, the trusted ID is a REAL ID. In an example, the trusted ID of the user includes an image of the user, one or more unique numbers identifying the user, a full name of the user, an address of the user, a date of birth of the user, a height of the user, an eye color of the user, and/or a sex of the user.

In an example, the user (e.g., the second user 122) may provide, as part of a registration process with an organization that controls the biometric ID server 138, biometric data to the biometric ID server 138, where the biometric data serves as a biometric ID of the user. In an example, the biometric IDs 146 may include facial data the user, iris data the user, fingerprint data the user, and/or voice data of the user. In an example, the user may visit a location (e.g., a kiosk) associated with the organization. The user may provide biometric data via a biometric component at the location. In another example, the user may provide the biometric data via the biometric component(s) 136 of the second device 120. The user may also provide information from the trusted ID to the organization. In an example, a representative of the organization at the location may examine the trusted ID in order to verify authenticity of the trusted ID. A computing device of the organization may receive information (e.g., the one or more unique identifiers, the image, etc.) from the trusted ID, whereupon the computing device may transmit the information to the biometric ID server 138. The biometric ID server 138 may store the information from the trusted ID as part of the trusted ID data 148. The biometric ID server 138 may also store the biometric ID of the user as part of the biometric IDs 146. The biometric ID server 138 may further store an association (e.g., a link) between the biometric ID of the user and the information from the trusted ID. In some aspects, the biometric ID server 138 may perform additional identity confirming actions for the user before storing the association.

The system may further include an additional ID verification server 150. The additional ID verification server 150 may include a processing device 152 and data storage 154. Although not depicted in FIG. 1, the additional ID verification server 150 may also include additional components (e.g., a network interface device, memory, etc.), such as those described below in the description of FIG. 6. The data storage 154 may store additional ID verification data 156 that may be used to verify an identity of a user (e.g., the second user 122) if the biometric ID server 138 is unable to verify the identity of the user.

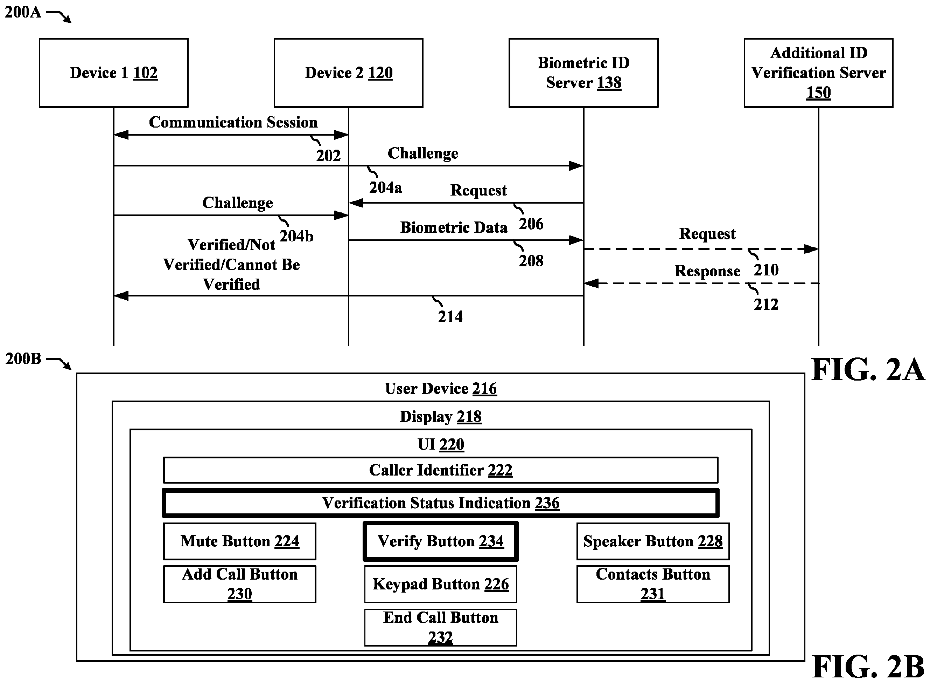

FIG. 2A is a communication flow diagram 200A that illustrates example communications for trusted ID verification in accordance with some aspects of the present disclosure. Referring jointly now to FIG. 1 and FIG. 2A, at 202, the first device 102 and the second device 120 establish a communication session via the network(s) 114. In an example, the communication application 112 and the communication application 128 establish the communication session. In an example, the communication session is a phone call, a video call, or an extended reality (XR) session. As used herein, a communication session refers to an exchange of data (e.g., audio data, video data, audiovisual data) between two or more computing devices such that participants (associated with the two or more computing devices) in the communication session communicate with one another. XR may refer to technologies that blend aspects of the real world with virtual data to give a user an immersive experience.

**In** one example, the second device 120 initiates the communication session. For instance, the second device 120 may receive input from the second user 122 that includes or indicates an identifier for the first device 102 and/or an identifier for the first user 104. The input may also cause the second device 120 to transmit an indication of the communication session to the first device 102. The indication of the communication session may include an identifier of the second device 120 and/or the second user 122. Upon receiving the indication of the communication session, the first device 102 may present the identifier of the second device 120 and/or the second user 122 on the UI 116. The first device 102 may receive input from the first user 104 which causes the communication session to be established. During the communication session, the first device 102 may receive audio data, video data, audiovisual data, or extended reality (XR) data from the second device 120. The first device 102 may present the audio data (e.g., via a speaker of the first device 102), the video data (e.g., via the display 110), the audiovisual data (e.g., via a combination of the speaker and the display 110), and/or the XR data (e.g., via an XR device such as a headset) to the first user 104. In another example, the first device 102 initiates the communication session in a manner similar to that described above with respect to the second device 120.

During the communication session, the first device 102 may receive input from the first user 104 that, at 204a, causes the first device 102 to transmit a challenge to the biometric ID server 138. The challenge may request that the second device 120 transmit biometric data of the second user 122 to the biometric ID server 138. In an example, during the communication session the second user 122 asks the first user 104 for sensitive information (e.g., a social security number, bank account information) of the first user 104. The ID verification application 118 may display a selectable UI element on the display 110 (e.g., on top of a UI for the communication application 112). The first device 102 may receive a selection of the selectable UI element that causes the first device 102 to transmit the challenge. In some aspects, the challenge may include an identifier of the biometric ID server 138. In some aspects, the challenge may include the identifier of the second device 120 and/or the identifier of the second user 122 that was obtained during the establishment of the communication session. In some aspects, the challenge may include an identifier of the first device 102 and/or an identifier of the first user 104. Upon receiving the challenge, at 206, the biometric ID server 138 may transmit, based on the identifier of the second device 120 and/or the identifier of the second user 122, a request to the second device 120 to transmit the biometric data of the second user 122 to the biometric ID server 138. Additionally, or alternatively to transmitting the challenge at 204a, the first device 102, at 204b, may transmit the challenge to the second device 120 during the communication session.

The second device 120 may receive the challenge from the first device 102 and/or the biometric ID server 138. In one aspect, the second device 120 may include the ID verification application 134 (i.e., the second device 120 has the ID verification application 134 installed thereon). In such an aspect, the second device 120, via the ID verification application 134, may obtain biometric data of the second user 122 via the biometric component(s) 136. At 208, the second device 120 transmits the biometric data to the biometric ID server 138 (e.g., via the network(s) 114).

The biometric ID server 138 may execute a search over the biometric ID-trusted ID data 144 based on the biometric data received from the second device 120. In some aspects, the search may be additionally based on the identifier of the second device 120 and/or the identifier of the second user 122 obtained by the first device 102 during the establishment of the communication session.

In one example, search results for the search indicate a biometric ID in the biometric IDs 146 that matches the biometric data. Thus, in the example, the second user 122 has registered with the biometric ID server 138 as described above. The biometric ID server 138 may identify trusted ID data for the second user 122 (in the trusted ID data 148) based on an association (e.g., a link) between the biometric ID and the trusted ID data for the second user 122. In some aspects, the biometric ID server 138 may compare the identifier of the second device 120 and/or the identifier of the second user 122 obtained by the first device 102 during the establishment of the communication session with information from the trusted ID data for the second user 122. The biometric ID server 138 may determine that the identity of the second user 122 is verified when the comparison indicates that the identifier of the second device 120 and/or the identifier of the second user 122 are equivalent to information from the trusted ID data for the second user 122. At 214, the biometric ID server 138 may transmit an indication to the first device 102 indicating that an identity of the second user 122 has been verified. The indication may be based on the comparison indicating that the identifier of the second device 120 and/or the identifier of the second user 122 are equivalent to information from the trusted ID data for the second user 122. The first device 102, via the ID verification application 118 and/or the communication application 112, may present graphical data corresponding to the indication on the UI 116. In some aspects, the first device 102 may perform the aforementioned comparison between the identifier of the second device 120 and/or the identifier of the second user 122 obtained by the first device 102 during the establishment of the communication session and the information from the trusted ID data for the second user 122.

**In** one aspect, subsequent to identifying the trusted ID data for the second user 122 (in the trusted ID data 148) based on an association (e.g., a link) between the biometric ID and the trusted ID data for the second user 122 and/or subsequent to performing the comparison, the biometric ID server 138 may transmit, at 210, a request for additional verification to the additional ID verification server 150. The request may include the biometric data (or a portion thereof), the trusted ID data for the second user 122 (or a portion thereof), and/or the identifier of the second device 120 and/or the identifier of the second user 122 obtained by the first device 102 during the establishment of the communication session. The additional ID verification server 150 may verify the second user 122 based on such data and at 212, the additional ID verification server 150 may transmit a response to the biometric ID server 138 indicating whether the additional ID verification server 150 was able to verify the second user 122. The biometric ID server 138 may transmit the indication at 214 based on the response. In one example, the response indicates that the additional ID verification server 150 verified the identity of the second user 122 and as such, the indication transmitted at 214 may indicate that the identity of the second user 122 is verified. In another example, the response indicates that the additional ID verification server 150 was unable to verify the identity of the second user 122 and as such, the indication transmitted at 214 may indicate that the identity of the second user 122 is unable to be verified.

In another example, search results for the search indicate that a biometric ID corresponding to the biometric data was not found in the biometric ID-trusted ID data 144. Thus, in the example, the second user 122 has not registered with the biometric ID server 138 as described above. The biometric ID server 138 may transmit, at 214, an indication to the first device 102 indicating that an identity of the second user 122 was not able to be verified. The first device 102, via the ID verification application 118 and/or the communication application 112, may present graphical data corresponding to the indication on the UI 116.

In some aspects, when the search results for the search indicate that a biometric ID corresponding to the biometric data was not found in the biometric ID-trusted ID data 144, the biometric ID server 138 may transmit, at 210, the request for additional verification to the additional ID verification server 150. The request may include the biometric data (or a portion thereof) and/or the identifier of the second device 120 and/or the identifier of the second user 122 obtained by the first device 102 during the establishment of the communication session. The additional ID verification server 150 may verify the second user 122 based on such data and at 212, the additional ID verification server 150 may transmit a response to the biometric ID server 138 indicating whether the additional ID verification server 150 was able to verify the second user 122. The biometric ID server 138 may transmit the indication at 214 based on the response. In one example, the response indicates that the additional ID verification server 150 verified the identity of the second user 122 and as such, the indication transmitted at 214 may indicate that the identity of the second user 122 is verified. In another example, the response indicates that the additional ID verification server 150 was unable to verify the identity of the second user 122 and as such, the indication transmitted at 214 may indicate that the identity of the second user 122 is unable to be verified.

In yet another example, the second user 122 is executing a deepfake attack on the first user 104 in which the second user 122 is impersonating a trusted person of the first user 104 via deepfake technology. The biometric ID server 138 may identify trusted ID data for the second user 122 (in the trusted ID data 148) based on an association (e.g., a link) between the biometric ID and the trusted ID data for the second user 122. The biometric ID server 138 may compare the identifier of the second device 120 and/or the identifier of the second user 122 obtained by the first device 102 during the establishment of the communication session with information from the trusted ID data for the second user 122. In the example, the comparison indicates that the identifier of the second device 120 and/or the identifier of the second user 122 is not equivalent to the information from the trusted ID data for the second user 122. At 214, the biometric ID server 138 may transmit an indication to the first device 102 indicating that an identity of the second user 122 is not verified. In some aspects, the indication may indicate that the second user 122 may be a potential deepfake attacker. The first device 102, via the ID verification application 118 and/or the communication application 112, may present graphical data corresponding to the indication on the UI 116. In some aspects, the first device 102 may perform the aforementioned comparison between the identifier of the second device 120 and/or the identifier of the second user 122 obtained by the first device 102 during the establishment of the communication session and the information from the trusted ID data for the second user 122.

FIG. 2B is a diagram 200B illustrating an example UI for trusted ID verification in accordance with some aspects of the present disclosure. The diagram 200B depicts a user device 216. In an example, the user device 216 may be or include the first device 102 and/or the second device 120. The user device 216 includes a display 218. The display 218 may be or include the display 110 and/or the display 130. Although not depicted in FIG. 2B, the user device 216 may include additional components (e.g., a microphone, a speaker, a video camera, a network interface device, an alphanumeric input device, a biometric component, etc.), such as those described below in the description of FIG. 6.

The display 218 may include a UI 220. The UI 220 may be or include the UI 116 and/or the UI 132. The UI 220 may include UI elements associated with the communication application 112 (or the communication application 128) and the ID verification application 118 (or the ID verification application 134). For instance, the UI 220 may include a caller identifier 222 that identifies one or more callers with which the user device 216 is engaged in a communication session therewith. In some aspects, the caller identifier 222 may display "UNKNOWN." The UI 220 may include a mute button 224 that enables the call to be muted when selected. The UI 220 may include a keypad button 226 that causes the user device 216 to display a keypad when selected. The UI 220 may include a speaker button 228 that enables a call to be played over a speaker of the user device 216 when selected. The UI 220 may include an add call button 230 that enables additional users to be added to the call. The UI 220 may include a contacts button 231 that causes the user device 216 to display contacts of a user of the user device 216 when selected. The UI 220 may include an end call button 232 that causes the user device 216 to end the call when selected.

The UI 220 may include a verify button 234. The verify button 234 may be associated with the communication application 112 and/or the communication application 128. When the user of the user device 216 initiates a challenge as described above, the verify button 234, when selected, causes the user device 216 to transmit the challenge to another device (e.g., the second device 120) and/or a server (e.g., the biometric ID server 138). When the user of the user device 216 is a recipient of the challenge as described above, the verify button 234, when selected causes biometric component(s) (e.g., the biometric component(s) 136) of the user device 216 to obtain biometric data of the user of the user device 216 and causes the user device 216 to transmit the biometric data to a server (e.g., the biometric ID server 138) as described above.

The UI 220 may further include a verification status indication 236. The verification status indication 236 may be associated with the communication application 112. Based on data received from a server (e.g., the biometric ID server 138), the verification status indication 236 may indicate whether an identity of a recipient of the challenge is verified, is not verified, or cannot be verified.

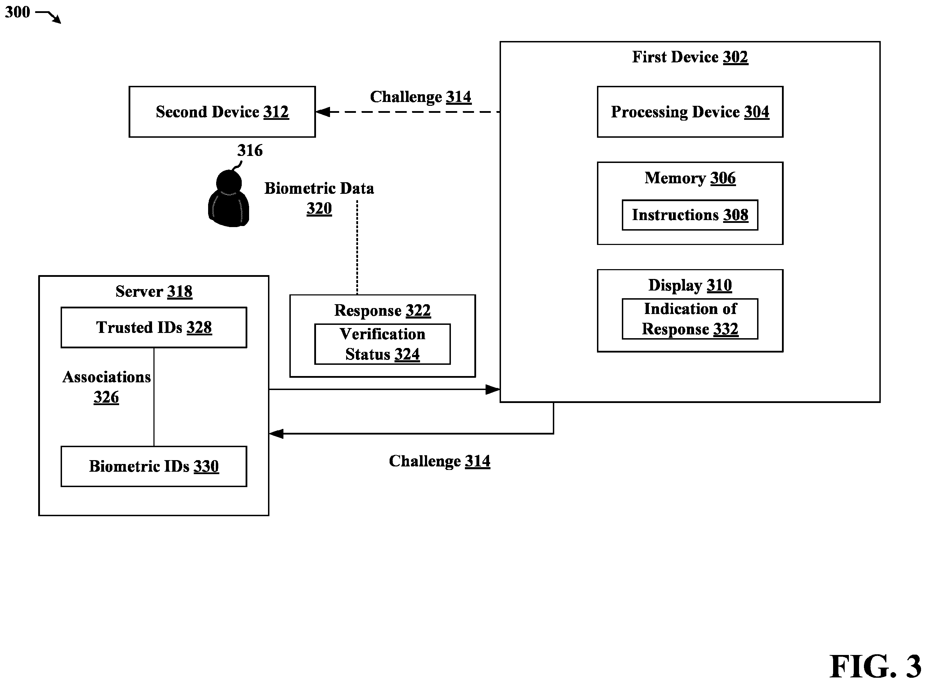

FIG. 3 is a diagram 300 that illustrates an example of a system for biometric and trusted ID verification in accordance with some aspects of the present disclosure. The system includes a first device 302. The first device 302 includes a processing device 304. The first device 302 also includes memory 306 storing instructions 308. The instructions 308, when executed by the processing device 304, may cause the processing device 304 to implement the various aspects described herein. The first device 302 may include a display 310.

The first device 302 (e.g., via the processing device 304) transmits, during a communication session between the first device 302 and a second device 312, a challenge 314 to an identity of a user 316 of the second device 312 to at least one of a server 318 or the second device 312. In some aspects, the challenge 314 requests the second device 312 to transmit biometric data 320 of the user 316 to the server 318. The first device 302 (e.g., via the processing device 304) receives, based on the challenge 314 during the communication session, a response 322 from the server 318 indicating a verification status 324 of the identity of the user 316 of the second device 312. The response 322 is based on associations 326 of trusted IDs 328 and biometric IDs 330 maintained by the server 318 and the biometric data 320 of the user 316. The first device 302 presents, during the communication session, an indication of the response 332.

Some users may be targeted by deepfake and/or AI voice generated video calls, phone calls, and other mobile communications, that is, the deepfake and/or AI voice generated video calls, phone calls, or other mobile communications may serve as an attack vector. Some devices may not have the ability to rapidly verify an identity of a caller with multi-faceted authentication while on a call. For instance, spam call filters may not be able to block an attack with a normally registered cell number with a fake ID. For non-contact call blocking technology, a scammer may be able to spoof phone numbers and present a caller ID separate from an originating number, thus bypassing the non-contact call blocking technology.

Some aspects presented herein pertain to a cellular based biometric and government ID verification system. In some aspects, API features of OSs of smartphones may be used to initiate a challenge to a caller requesting that the caller verify themselves using a biometric identification confirmation service backed up by a verified government ID. In some aspects, the verified government ID may be a REAL ID (i.e., REAL ID compliant). In some aspects, the verified government ID may include an ID that includes biometric features, such as a driving license, a passport, or another form of verification. In some aspects, an ID verification application may facilitate the initiation of the challenge using a software development kit (SDK) of a smartphone. For instance, the application may use the SDK to integrate with a messaging and/or a call application in the form of a button displayed to a user. If the user presses the button, an API call may be transmitted with a series of outcomes.

In one outcome, a recipient of the challenge may include the ID verification application which allows API features to be used to verify the identity of the recipient and information about the caller may be displayed on a smartphone that initiated the challenge. The verification application may display an alert indicating that an identity of the caller has been verified. In another outcome, the recipient of the challenge does not include the ID verification application; however, the recipient may verify their identity using another service. The verification application may display an alert indicating that the identity of the caller has been verified using another service. In yet another outcome, the recipient of the challenge is unable to verify themselves. The verification application may display an alert indicating that the identity of the caller cannot be verified.

Although the description above focuses on a communication session and audiovisual communications, other possibilities are contemplated. The concepts presented herein may also be applicable to non- communication sessions (e.g., text messages, etc.).

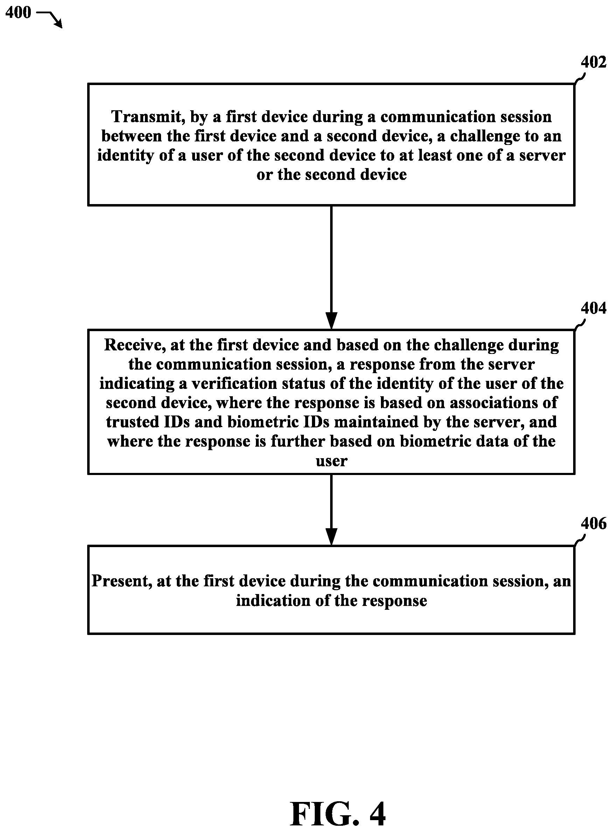

FIG. 4 is a flow diagram 400 of a method for biometric and trusted ID verification in accordance with some aspects of the present disclosure. The method may be performed by processing logic that may include hardware (e.g., a processing device), software (e.g., instructions running/executing on a processing device), firmware (e.g., microcode), or a combination thereof. In some aspects, at least a portion of the method may be performed by the first device 102 (shown in FIG. 1 and in FIG. 2A), the processing device 106 (shown in FIG. 1), the ID verification application 118 (shown in FIG. 1), the communication application 112 (shown in FIG. 1), the user device 216 (shown in FIG. 2B), the first device 302 (shown in FIG. 3), the processing device 602 (shown in FIG. 6), or a combination thereof.

At block 402, a processing device transmits, by a first device during a communication session between the first device and a second device, a challenge to an identity of a user of the second device to at least one of a server or the second device. In an example, the first device may be or include the first device 102 and/or the user device 216. In an example, the second device may be or include the second device 120 and/or the user device 216. In an example, the user of the second device may be the second user 122. In an example, the server may be or include the biometric ID server 138. In an example, transmitting the challenge may correspond to 204a and/or 204b in FIG. 2A. In some aspects, the challenge requests the second device to transmit biometric data of the user to the server.

At block 404, the processing device receives, at the first device and based on the challenge during the communication session, a response from the server indicating a verification status of the identity of the user of the second device, where the response is based on associations of trusted IDs and biometric IDs maintained by the server, and where the response is further based on biometric data of the user. In an example, receiving the response may correspond to 214 in FIG. 2A. In an example, the associations of trusted IDs and biometric IDs maintained by the server may correspond to the biometric ID-trusted ID data 144.

At block 406, the processing device presents, at the first device during the communication session, an indication of the response. In an example, the indication of the response may be presented on the UI 116. In another example, the indication of the response may correspond to the verification status indication 236 in the UI 220.

The method illustrates example functions used by various embodiments. Although specific function blocks ("blocks") are disclosed in the method, such blocks are examples. That is, embodiments are well suited to performing various other blocks or variations of the blocks recited in the method. It is appreciated that the blocks in the method may be performed in an order different than presented, and that not all of the blocks in the method may be performed.

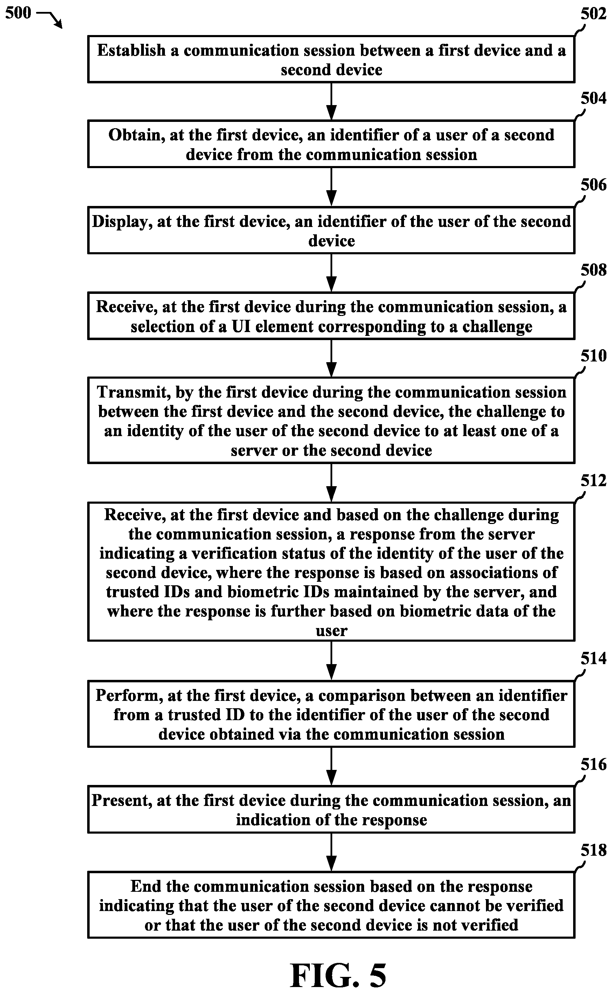

FIG. 5 is a flow diagram 500 of a method for biometric and trusted ID verification in accordance with some aspects of the present disclosure. The method may be performed by processing logic that may include hardware (e.g., a processing device), software (e.g., instructions running/executing on a processing device), firmware (e.g., microcode), or a combination thereof. In some aspects, at least a portion of the method may be performed by the first device 102 (shown in FIG. 1 and in FIG. 2A), the processing device 106 (shown in FIG. 1), the ID verification application 118 (shown in FIG. 1), the communication application 112 (shown in FIG. 1), the user device 216 (shown in FIG. 2B), the first device 302 (shown in FIG. 3), the processing device 602 (shown in FIG. 6), or a combination thereof.

The method illustrates example functions used by various embodiments. Although specific function blocks ("blocks") are disclosed in the method, such blocks are examples. That is, embodiments are well suited to performing various other blocks or variations of the blocks recited in the method. It is appreciated that the blocks in the method may be performed in an order different than presented, and that not all of the blocks in the method may be performed.

The method illustrates example functions used by various embodiments. Although specific function blocks ("blocks") are disclosed in the method, such blocks are examples. That is, embodiments are well suited to performing various other blocks or variations of the blocks recited in the method. It is appreciated that the blocks in the method may be performed in an order different than presented, and that not all of the blocks in the method may be performed.

At block 502, a processing device (at a first device) may establish a communication session between a first device and a second device. For example, establishing the communication session may correspond to 202 in FIG. 2A. In an example, the first device may be the first device 102 and the second device may be the second device 120. In an example, the first device may be the user device 216. In another example, the second device may be the user device 216. In an example, the communication session may include an audio call, a video call, and/or an XR session.

At block 504, the processing device may obtain, at the first device, an identifier of a user of a second device from the communication session. In an example, the user of the second device may be the second user 122. In an example, the identifier of the user of the second device may be a caller ID.

At block 506, the processing device may display, at the first device, an identifier of the user of the second device. In an example, the identifier of the user of the second device may be the caller identifier 222.

At block 508, the processing device may receive, at the first device during the communication session, a selection of a UI element corresponding to a challenge. For example, the UI element may be or include the verify button 234.

At block 510, the processing device transmits, by the first device during the communication session between the first device and the second device, the challenge to an identity of the user of the second device to at least one of a server or the second device. In an example, the server may be or include the biometric ID server 138. In an example, transmitting the challenge may correspond to 204a and/or 204b in FIG. 2A. In an example, transmitting the challenge may include transmitting the challenge based on the selection of the UI element. In an example, the biometric data includes at least one of facial data of the user, iris data of the user, fingerprint data of the user, or voice data of the user. In some aspects, the challenge requests the second device to transmit biometric data of the user to the server.

At block 512, the processing device receives, at the first device and based on the challenge during the communication session, a response from the server indicating a verification status of the identity of the user of the second device, where the response is based on associations of trusted IDs and biometric IDs maintained by the server, and where the response is further based on biometric data of the user. In an example, receiving the response may correspond to 214 in FIG. 2A. In an example, the associations of trusted IDs and biometric IDs maintained by the server may correspond to the biometric ID-trusted ID data 144. In an example, the trusted IDs may be government issued IDs. In an example, the trusted IDs may include REAL IDs.

In some aspects, the challenge may include an identifier of the user of the second device received by the first device during the communication session, and the verification status of the identity of the user may be further based on a comparison between the identifier of the user of the second device and the identifier from the trusted ID. In an example, the comparison may be associated with the biometric ID server 138.

In some aspects, the response may include an identifier from a trusted ID in the trusted IDs, and at block 514, the processing device may perform, at the first device, a comparison between an identifier from a trusted ID to the identifier of the user of the second device obtained via the communication session. In an example, the identifier of the user of the second device obtained via the communication session may be a caller ID.

At block 516, the processing device presents, at the first device during the communication session, an indication of the response. In an example, the indication of the response may be presented on the UI 116. In another example, the indication of the response may correspond to the verification status indication 236 in the UI 220. In some aspects, the indication of the response may be displayed at the first device concurrently with the identifier of the user of the second device. In some aspects, presenting the indication of the response may be based on a comparison (e.g., the comparison performed at block 514).

In some aspects, at block 518, the processing device may end (e.g., disconnect) the communication session based on the response indicating that the user of the second device cannot be verified or that the user of the second device is not verified. In some aspects, the processing device may block the communication session based on the response indicating that the user of the second device cannot be verified or that the user of the second device is not verified. In some aspects, the processing device may allow the communication session based on the response indicating that the user of the second device is verified.

In one aspect, the comparison may indicate that the identifier from the trusted ID is not equivalent to the identifier of the user of the second device obtained via the communication session, and the indication of the response may indicate that the identifier from the trusted ID is not equivalent to the identifier of the user of the second device obtained via the communication session.

In one aspect, the trusted IDs may include a trusted ID of the user and the biometric IDs include a biometric ID of the user of the second device, the verification status may indicate that the identity of the user of the second device is verified based on the trusted ID, the biometric ID, and the biometric data, and presenting the indication of the response may include presenting graphical data on a display at the first device indicating that the identity of the user of the second device is verified. The aforementioned aspect may correspond to 214 in FIG. 2A.

In one aspect, the trusted IDs may fail to include a trusted ID of the user and the biometric IDs fail to include a biometric ID of the user of the second device, the verification status may indicate that the identity of the user of the second device cannot be verified, and presenting the indication of the response may include presenting graphical data on a display at the first device indicating that the identity of the user of the second device cannot be verified. The aforementioned aspect may correspond to 214 in FIG. 2A.

In one aspect, the trusted IDs may fail to include a trusted ID of the user and the biometric IDs may fail to include a biometric ID of the user of the second device, receiving the response from the server indicating whether the identity of the user of the second device is verified may include receiving an indication that a second server has verified the identity of the user. In an example, the second server may be or include the additional ID verification server 150. In an example, the aforementioned aspect may correspond to 210 and 212 in FIG. 2A.

In one aspect, transmitting the challenge, receiving the response, and presenting the indication of the response include transmitting the challenge, receiving the response, and presenting the indication of the response by way of a plug-in application for a communication application executed by the first device. In an example, the plug-in application may be or include the ID verification application 118 and the communication application may be or include the communication application 112.

In some aspects, a deepfake associated with the user of the second device may be presented at the first device during the communication session.

FIG. 6 illustrates a diagrammatic representation of a machine in the example form of a computer system 600 within which a set of instructions, for causing the machine to perform any one or more of the methodologies discussed herein for biometric and trusted ID verification.

In alternative embodiments, the machine may be connected (e.g., networked) to other machines in a local area network (LAN), an intranet, an extranet, or the Internet. The machine may operate in the capacity of a server or a client machine in a client-server network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a server, a network router, a switch or bridge, a hub, an access point, a network access control device, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein. In some embodiments, the computer system 600 may be representative of a server.

The computer system 600 includes a processing device 602, a main memory 604 (e.g., read-only memory (ROM), flash memory, dynamic random access memory (DRAM), a static memory 605 (e.g., flash memory, static random access memory (SRAM), etc.), and a data storage device 618 which communicate with each other via a bus 630. Any of the signals provided over various buses described herein may be time multiplexed with other signals and provided over one or more common buses. Additionally, the interconnection between circuit components or blocks may be shown as buses or as single signal lines. Each of the buses may alternatively be one or more single signal lines and each of the single signal lines may alternatively be buses.

The computer system 600 may further include a network interface device 608 which may communicate with a network 620. The computer system 600 also may include a video display unit 610 (e.g., a liquid crystal display (LCD) or a cathode ray tube (CRT)), an alphanumeric input device 612 (e.g., a keyboard), a cursor control device 614 (e.g., a mouse), and a signal generation device 615 (e.g., an acoustic signal generation device, such as a speaker). In some embodiments, the video display unit 610, the alphanumeric input device 612, and the cursor control device 614 may be combined into a single component or device (e.g., an LCD touch screen).

The processing device 602 represents one or more general-purpose processing devices such as a microprocessor, central processing unit, or the like. More particularly, the processing device may be complex instruction set computing (CISC) microprocessor, reduced instruction set computer (RISC) microprocessor, very long instruction word (VLIW) microprocessor, or processor implementing other instruction sets, or processors implementing a combination of instruction sets. The processing device 602 may also be one or more special-purpose processing devices such as an application specific integrated circuit (ASIC), a field programmable gate array (FPGA), a digital signal processor (DSP), network processor, or the like. The processing device 602 is configured to execute verification instructions 625, for performing the operations and steps discussed herein. For example, the verification instructions 625 may include instructions for transmitting, by a first device during a communication session between the first device and a second device, a challenge to an identity of a user of the second device to at least one of a server or the second device. The verification instructions 625 may include instructions for receiving, by a processing device at the first device and based on the challenge during the communication session, a response from the server indicating a verification status of the identity of the user of the second device, where the response is based on associations of trusted identifications (IDs) and biometric IDs maintained by the server, and where the response is further based on biometric data of the user. The verification instructions 625 may include instructions for presenting, on the first device during the communication session, an indication of the response.

The data storage device 618 may include a machine-readable storage medium 628 that stores the verification instructions 625 (e.g., software) embodying any one or more of the methodologies of functions described herein. The verification instructions 625 may also reside, completely or at least partially, within the main memory 604 or within the processing device 602 during execution thereof by the computer system 600; the main memory 604 and the processing device 602 also constituting machine-readable storage media. The verification instructions 625 may further be transmitted or received over a network 620 via the network interface device 608.

While the machine-readable storage medium 628 is shown in an exemplary embodiment to be a single medium, the term "machine-readable storage medium" should be taken to include a single medium or multiple media (e.g., a centralized or distributed database, or associated caches and servers) that store the one or more sets of instructions. A machine-readable storage medium includes any mechanism for storing information in a form (e.g., software, processing application) readable by a machine (e.g., a computer). The machine-readable storage medium may include, but is not limited to, magnetic storage medium (e.g., floppy diskette); optical storage medium (e.g., CD-ROM); magneto-optical storage medium; read-only memory (ROM); random-access memory (RAM); erasable programmable memory (e.g., EPROM and EEPROM); flash memory; or another type of medium suitable for storing electronic instructions.

Unless specifically stated otherwise, terms such as "obtaining," "transmitting," "receiving," "presenting," "establishing," "displaying," "performing," "determining," "identifying," "executing," "searching," "ending," or the like, refer to actions and processes performed or implemented by computing devices that manipulates and transforms data represented as physical (electronic) quantities within the computing device's registers and memories into other data similarly represented as physical quantities within the computing device memories or registers or other such information storage, transmission, or display devices. Also, the terms "first," "second," "third," "fourth" etc., as used herein are meant as labels to distinguish among different elements and may not necessarily have an ordinal meaning according to their numerical designation.

Examples described herein also relate to an apparatus for performing the operations described herein. This apparatus may be specially constructed for the required purposes, or it may comprise a general-purpose computing device selectively programmed by a computer program stored in the computing device. Such a computer program may be stored in a computer-readable non-transitory storage medium.

The methods and illustrative examples described herein are not inherently related to any particular computer or other apparatus. Various general-purpose systems may be used in accordance with the teachings described herein, or it may prove convenient to construct more specialized apparatus to perform the required method steps. The required structure for a variety of these systems will appear as set forth in the description above.

The above description is intended to be illustrative, and not restrictive. Although the present disclosure has been described with references to specific illustrative examples, it will be recognized that the present disclosure is not limited to the examples described. The scope of the disclosure should be determined with reference to the following claims, along with the full scope of equivalents to which the claims are entitled.

As used herein, the singular forms "a," "an," and "the" are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof. Therefore, the terminology used herein is for the purpose of describing particular embodiments only and is not intended to be limiting.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Although the method operations were described in a specific order, it should be understood that other operations may be performed in between described operations, described operations may be adjusted so that they occur at slightly different times or the described operations may be distributed in a system which allows the occurrence of the processing operations at various intervals associated with the processing.

Various units, circuits, or other components may be described or claimed as "configured to" or "configurable to" perform a task or tasks. In such contexts, the phrase "configured to" or "configurable to" is used to connote structure by indicating that the units/circuits/components include structure (e.g., circuitry) that performs the task or tasks during operation. As such, the unit/circuit/component can be said to be configured to perform the task, or configurable to perform the task, even when the specified unit/circuit/component is not currently operational (e.g., is not on). The units/circuits/components used with the "configured to" or "configurable to" language include hardware--for example, circuits, memory storing program instructions executable to implement the operation, etc. Reciting that a unit/circuit/component is "configured to" perform one or more tasks, or is "configurable to" perform one or more tasks, is expressly intended not to invoke 35 U.S.C. § 112(f) for that unit/circuit/component. Additionally, "configured to" or "configurable to" can include generic structure (e.g., generic circuitry) that is manipulated by software and/or firmware (e.g., an FPGA or a general-purpose processor executing software) to operate in manner that is capable of performing the task(s) at issue. "Configured to" may also include adapting a manufacturing process (e.g., a semiconductor fabrication facility) to fabricate devices (e.g., integrated circuits) that are adapted to implement or perform one or more tasks. "Configurable to" is expressly intended not to apply to blank media, an unprogrammed processor or unprogrammed generic computer, or an unprogrammed programmable logic device, programmable gate array, or other unprogrammed device, unless accompanied by programmed media that confers the ability to the unprogrammed device to be configured to perform the disclosed function(s).

The foregoing description, for the purpose of explanation, has been described with reference to specific embodiments. However, the illustrative discussions above are not intended to be exhaustive or to limit the present disclosure to the precise forms disclosed. Many modifications and variations are possible in view of the above teachings. The embodiments were chosen and described in order to best explain the principles of the embodiments and its practical applications, to thereby enable others skilled in the art to best utilize the embodiments and various modifications as may be suited to the particular use contemplated. Accordingly, the present embodiments are to be considered as illustrative and not restrictive, and the present disclosure is not to be limited to the details given herein, but may be modified within the scope and equivalents of the appended claims.

## Claims

1. A method, comprising:
transmitting, by a first device during a communication session between the first device and a second device, a challenge to an identity of a user of the second device to at least one of a server or the second device;
receiving, by a processing device at the first device and based on the challenge during the communication session, a response from the server indicating a verification status of the identity of the user of the second device, wherein the response is based on associations of trusted identifications, IDs, and biometric IDs maintained by the server, and wherein the response is further based on biometric data of the user; and
presenting, at the first device during the communication session, an indication of the response.

2. The method of claim 1, further comprising:
receiving, at the first device during the communication session, a selection of a user interface, UI, element corresponding to the challenge, wherein the transmitting the challenge comprises transmitting the challenge based on the selection of the UI element.

3. The method of claim 1 or claim 2, wherein the communication session comprises at least one of an audio call, a video call, or an extended reality, XR, session and/or wherein the biometric data comprises at least one of facial data of the user, iris data of the user, fingerprint data of the user, or voice data of the user and/or wherein the trusted IDs comprise government issued IDs.

4. The method of any preceding claim, wherein
the trusted IDs include a trusted ID of the user and the biometric IDs include a biometric ID of the user of the second device,
the verification status indicates that the identity of the user of the second device is verified based on the trusted ID, the biometric ID, and the biometric data, and
the presenting the indication of the response comprises presenting graphical data on a display at the first device indicating that the identity of the user of the second device is verified.

5. The method of any preceding claim, wherein
the trusted IDs fail to include a trusted ID of the user and the biometric IDs fail to include a biometric ID of the user of the second device,
the verification status indicates that the identity of the user of the second device cannot be verified, and
the presenting the indication of the response comprises presenting graphical data on a display at the first device indicating that the identity of the user of the second device cannot be verified.

6. The method of any preceding claim, wherein
the trusted IDs fail to include a trusted ID of the user and the biometric IDs fail to include a biometric ID of the user of the second device, and
the receiving the response from the server indicating whether the identity of the user of the second device is verified comprises receiving an indication that a second server has verified the identity of the user.

7. The method of any preceding claim, wherein the challenge requests the second device to transmit the biometric data of the user to the server and/or wherein
the challenge comprises an identifier of the user of the second device received by the first device during the communication session, and
the verification status of the identity of the user is further based on a comparison between the identifier of the user of the second device and an identifier from a trusted ID**.**

8. The method of any preceding claim, further comprising:
establishing the communication session between the first device and the second device;
obtaining, at the first device, an identifier of the user of the second device from the communication session; and
displaying, at the first device, an identifier of the user of the second device, wherein the identifier of the user of the second device is displayed at the first device concurrently with the indication of the response.

9. The method of any preceding claim, wherein the response includes an identifier from a trusted ID in the trusted IDs, the method further comprising:
performing, at the first device, a comparison between the identifier from the trusted ID to an identifier of the user of the second device obtained via the communication session, wherein the presenting the indication of the response is based on the comparison, optionally wherein the comparison indicates that the identifier from the trusted ID is not equivalent to the identifier of the user of the second device obtained via the communication session, and optionally wherein the indication of the response indicates that the identifier from the trusted ID is not equivalent to the identifier of the user of the second device obtained via the communication session.

10. The method of any preceding claim, wherein the transmitting the challenge, the receiving the response, and the presenting the indication of the response comprise transmitting the challenge, receiving the response, and presenting the indication of the response by way of a plug-in application for a communication application executed by the first device.

11. The method of any preceding claim, further comprising:
ending the communication session based on the response indicating that the user of the second device cannot be verified or that the user of the second device is not verified.

12. A system, comprising:
a processing device; and
a memory to store instructions that, when executed by the processing device, cause the processing device to:
transmit, by a first device during a communication session between the first device and a second device, a challenge to an identity of a user of the second device to at least one of a server or the second device;
receive, at the first device and based on the challenge during the communication session, a response from the server indicating a verification status of the identity of the user of the second device, wherein the response is based on associations of trusted identifications, IDs, and biometric IDs maintained by the server, and wherein the response is further based on biometric data of the user; and
present, at the first device during the communication session, an indication of the response.

13. The system of claim 12, wherein the trusted IDs comprise REAL IDs and/or wherein the processing device is further to:
receive, at the first device during the communication session, a selection of a user interface, UI, element corresponding to the challenge, wherein to transmit the challenge, the processing device is to transmit the challenge based on the selection of the UI element.

14. A non-transitory computer readable medium, having instructions stored thereon which, when executed by a processing device at a first device, cause the processing device to:
transmit, by the first device during a communication session between the first device and a second device, a challenge to an identity of a user of the second device to at least one of a server or the second device;
receive, by the processing device at the first device and based on the challenge during the communication session, a response from the server indicating a verification status of the identity of the user of the second device, wherein the response is based on associations of trusted identifications, IDs, and biometric IDs maintained by the server, and wherein the response is further based on biometric data of the user; and
present, at the first device during the communication session, an indication of the response.

15. The non-transitory computer readable medium of claim 14, wherein the instructions, when executed by the processing device, further cause the processing device to:
receive, at the first device during the communication session, a selection of a user interface, UI, element corresponding to the challenge, wherein to transmit the challenge, the instructions, when executed by the processing device, cause the processing device to transmit the challenge based on the selection of the UI element.
